**Europäisches Patentamt**

(19) **European Patent Office**

**Office européen des brevets**

(11) Numéro de publication: **0 125 959**
**B1**

(12) # FASCICULE DE BREVET EUROPÉEN

(45) Date de publication du fascicule du brevet:
**05.11.86**

(51) Int. Cl.⁴: **F 16 D 65/16,** B 60 T 13/38

(21) Numéro de dépôt: **84400778.1**

(22) Date de dépôt: **18.04.84**

(54) **Dispositif de freinage à actionnement mécanique.**

(30) Priorité: **29.04.83 FR 8307142**

(43) Date de publication de la demande:
**21.11.84 Bulletin 84/47**

(45) Mention de la délivrance du brevet:
**05.11.86 Bulletin 86/45**

(84) Etats contractants désignés:
**DE GB IT**

(56) Documents cité:
**DE-A-2 730 959**
**FR-A-1 317 919**
**FR-A-1 340 290**
**FR-A-2 051 260**
**FR-A-2 331 717**
**US-A-3 402 792**

(73) Titulaire: **BENDIX France, 126, rue de Stalingrad,
F-93700 Drancy (FR)**

(72) Inventeur: **Carré, Jean- Jacques, 59 Boulevard de
l'Est, F-93340 Le Raincy (FR)**
Inventeur: **Meyer, Yves, 3 Allée du Pré Fleuri,
F-95150 Taverny (FR)**

(74) Mandataire: **Poidatz, Emmanuel, Service Brevets
Bendix 44 rue François 1er, F-75008 Paris (FR)**

EP 0 125 959 B1

LIBER, STOCKHOLM 1986

## Description

La présente invention a pour objet un dispositif de freinage, notamment pour véhicules automobiles, comprenant un moteur de frein muni d'un dispositir d'actionnement mécanique de type rotatif incluant, de préférence, un mécanisme du genre vis-et-écrou à pas dit réversible, et un vérin de commande relié par un moyen de transmission de force audit dispositif d'actionnement.

Le brevet français N° 1 340 290 illustre un dispositif de freinage de ce genre, dans lequel le moyen de transmission de force, qui convertit le mouvement de translation rectiligne de l'organe de sortie du vérin de commande en un mouvement angulaire de la vis du dispositif d'actionnement mécanique du moteur de frein, est constitué par un système classique à tige et manivelle. Même en admettant que l'effort engendré dans le vérin de commande soit constant sur toute la longueur de course de la tige du piston, un tel dispositif de freinage présente l'inconvénient d'appliquer un couple variable à la vis du dispositif d'actionnement en raison de la modification progressive du bras de levier effectif de la manivelle qui y est attachée. En outre, la rotation qu'il est possible de communiquer à la vis du dispositif d'actionnement est pratiquement limitée à un angle de 60° à 90° au maximum, ce qui peut s'avérer insuffisant pour certaines applications.

Le problème ci-dessus évoqué de la non-constance du couple appliqué à la vis du dispositif d'actionnement du moteur de frein s'aggrave encore lorsqu'on utilise comme vérin de commande, non plus un vérin à action directe, mais un vérin du type dit "cylindre à ressort" dans lequel un puissant ressort est normalement maintenu comprimé par un piston ou autre organe soumis à l'action d'un fluide sous pression et se détend en libérant un effort moteur lorsque cesse l'action de ce fluide. En effet, dans ce genre de vérin qui est souvent installé sur des véhicules lourds comme moyen de freinage de secours ou de stationnement, l'effort moteur développé par le ressort décroît appréciablement au fur et à mesure de sa détente alors qu'il serait au contraire souhaitable de disposer d'un effort constant, voire même accru, au fur et à mesure du serrage du frein. Cet effet s'ajoute à celui de la réduction du couple appliqué à la vis qui résulte de la diminution progressive du bras de levier de la manivelle, comme exposé ci-dessus.

La présente invention se donne en conséquence pour but d'améliorer les performances d'un tel dispositif de freinage, soit en rendant le couple appliqué à l'organe rotatif du dispositif d'actionnement du moteur de frein indépendant de la course de l'organe de sortie du vérin de commande, soit, plus généralement, en le soumettant à toute autre loi de variation désirée autre que celle qui découle de l'affaiblissement de l'effort moteur du ressort au cours de sa détente et/ou de la diminution progressive du bras de levier effectif de la manivelle.

L'invention se donne également pour but d'accroître appréciablement l'angle de rotation maximal qu'il est possible de communiquer, dans un tel dispositif de freinage, à l'organe rotatif du dispositif d'actionnement du moteur de frein: ceci peut notamment permettre d'augmenter le jeu de garde des garnitures du frein, ou encore d'accroître la pression exercée sur celles-ci en cours de freinage grâce à une réduction du pas de la vis du mécanisme moteur.

Ces buts sont atteints, conformément à l'invention, et dans un dispositif de freinage du genre défini ci-dessus, grâce au fait que le moyen de transmission de force interposé entre le moteur de frein et le vérin de commande comprend un organe en forme de came solidaire de l'organe rotatif du dispositif d'actionnement mécanique du moteur de frein, et un organe souple de transmission (câble ou chaîne par exemple) attaché à l'une de ses extrémités à l'organe de sortie du vérin de commande et tenu enroulé à son autre extrémité sur ledit organe en forme de came, le profil de cette derniére étant déterminé de maniére à ce que le couple appliqué à l'organe rotatif du dispositif d'actionnement mécanique du moteur de frein suive une loi de variation désirée en fonction de la course de l'organe de sortie du vérin de commande. Dans la majorité des applications, le profil de la came sera dessiné de maniére à assurer la constance du couple appliqué à l'organe rotatif du dispositif d'actionnement sur une partie au moins de la course de l'organe de sortie du vérin de commande.

Dans une forme préférentielle de réalisation, l'organe en forme de came est constitué par un secteur de poulie calé sur un arbre solidaire de l'organe rotatif du dispositif d'actionnement mécanique du moteur de frein, ce secteur de poulie étant pourvu d'une gorge dans laquelle est reçue l'extrémité de l'organe souple de transmission et dont le rayon croît de façon continue entre le point de pénétration dudit organe dans la gorge en position de repos et le point d'attache de son extrémité. Rien ne limitant à priori l'angle d'ouverture dudit secteur, on conçoit aisément qu'il soit possible de donner toute valeur souhaitée à l'angle maximum de rotation de l'organe rotatif du dispositif d'actionnement du moteur de frein, jusqu'alors limité à quelque 90° ; il devient même possible, en donnant à la gorge une conformation hélicoïdale, de porter cet angle à plus de 360° si de besoin. L'invention offre encore l'avantage supplémentaire de pemmettre une attaque oblique du dispositif d'actionnement du moteur de frein, à condition de prévoir à cet effet sur le secteur de poulie une gorge convenablement inclinée.

Les caractéristiques et avantages de l'invention apparaîtront plus clairement à la lecture de la description suivante d'une forme préférentielle de réalisation, donnée à simple titre d'exemple illustratif et avec référence aux dessins ci-annexés, en lesquels:

- La figure 1 représente en vue cavalière et coupe longitudinale un moteur de frein, d'un type en lui-même connu, utilisable dans le cadre de la présente invention;
- la figure 2 est un diagramme illustrant la loi idéale de variation de l'effort développé pas le piston du moteur de frein de la figure 1 en fonction de sa course lors de l'actionnement du frein:
- la figure 3 montre en coupe longitudinale un vérin de commande, d'un type en lui-même connu, mais pourvu d'un organe de sortie modifié pour la mise en oeuvre de l'invention;
- la figure 4 est un diagramme illustrant la loi réelle de variation de l'effort disponible sur l'organe de sortie du vérin de la figure 3 en fonction de sa course au fur et à mesure de la détente du ressort;
- la figure 5 montre en vue cavalière une forme de réalisation préférentielle de l'invention:
- la figure 6 montre en élévation et coupe longitudinale l'organe en forme de came utilisé dans le dispositif de l'invention;
- la figure 7 est une vue en coupe transversale de ce même organe, suivant la ligne VII-VII de la figure 6; et
- la figure 8 illustre une variante de réalisation de l'organe en forme de came des figures 6 et 7.

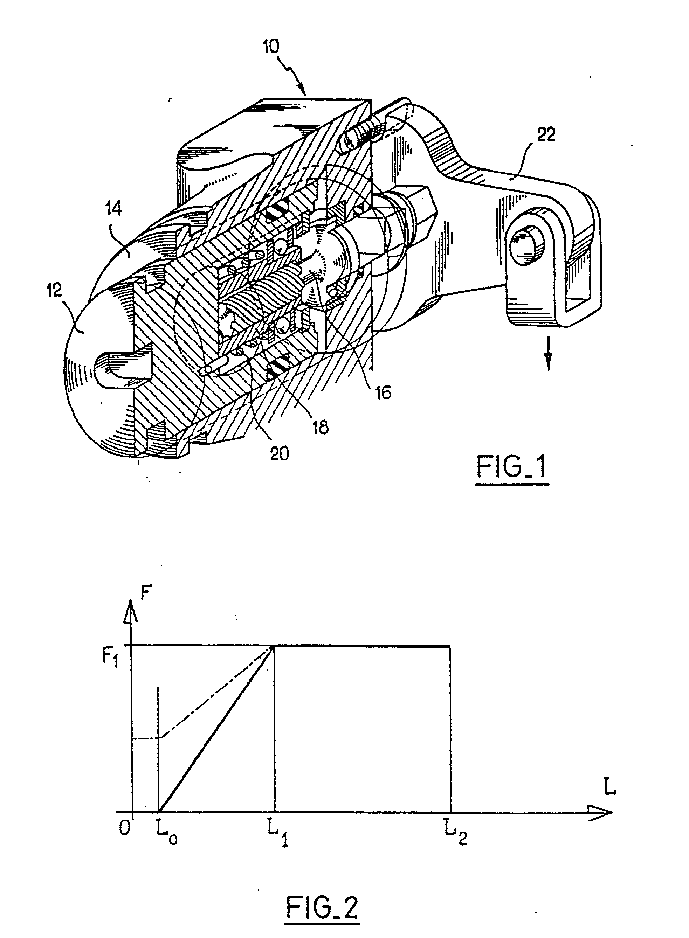

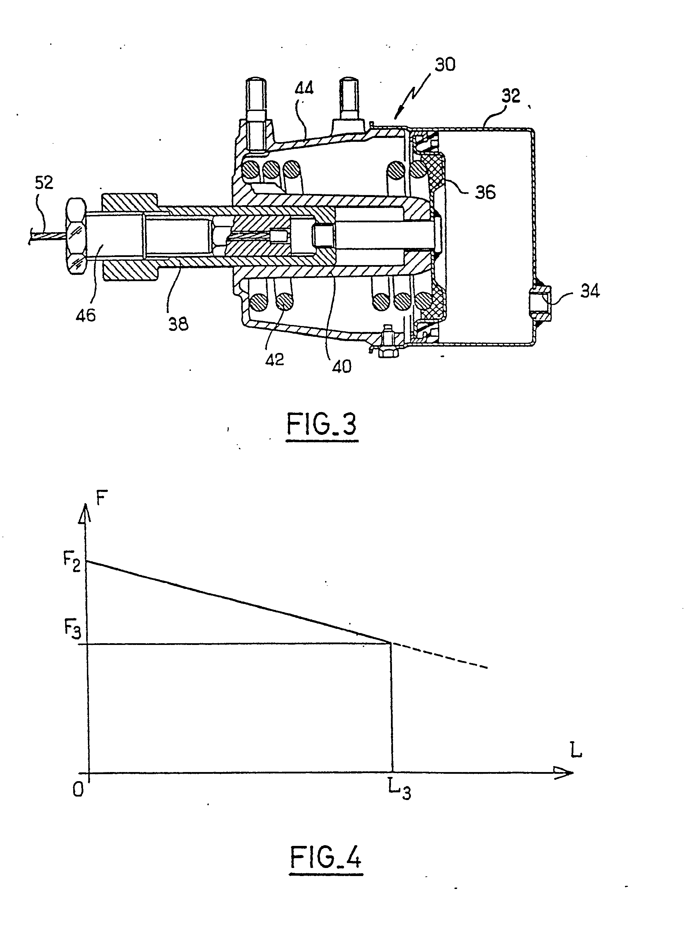

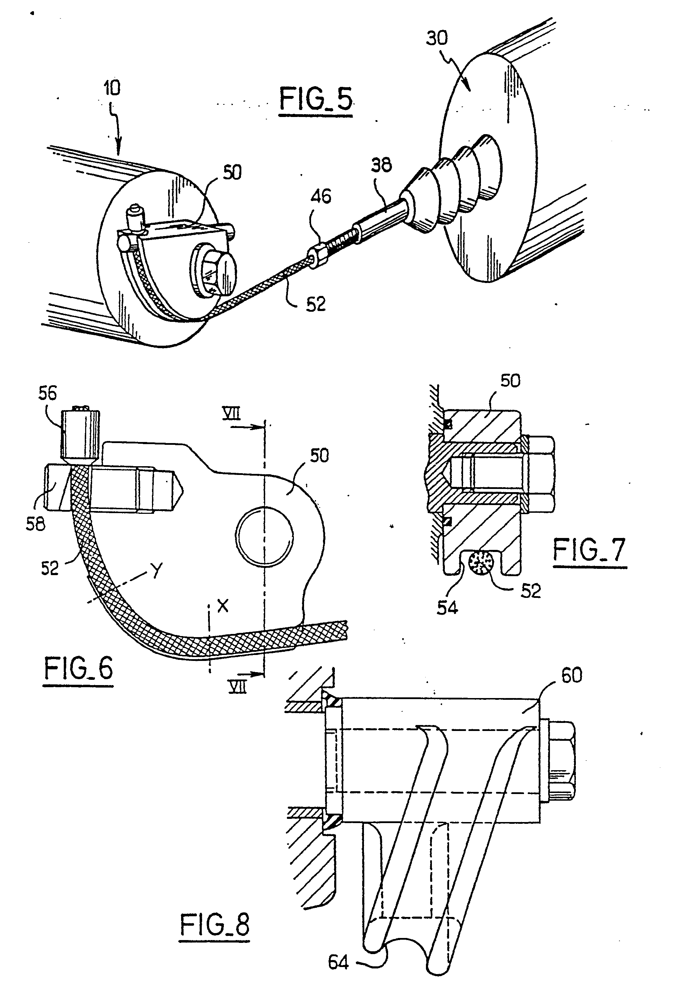

Le dispositif de freinage selon l'invention se compose essentiellement d'un moteur de frein tel que celui représenté à la figure 1. des dessins, d'un vérin de commande tel que celui de la figure 3, et d'un moyen de transmission de force tel qu'illustré aux figures 5 à 8.

Le moteur de frein 10 de la figure 1 a déjà été décrit par la Demanderesse dans son brevet français N° 1 317 919, et l'on se contentera, pour cette raison, de rappeler succinctement qu'il s'agit d'un moteur de frein à disque comprenant à la fois un dispositif d'actionnement hydraulique constitué d'un piston 12 et d'un cylindre 14, et un dispositif d'actionnent mécanique utilisable notamment comme frein de stationnement, ce dispositif de type rotatif incluant une vis 16 à pas dit réversible qui coopère avec une douille ou écrou 18 freinée en rotation par un ressort 20; lorsqu'un mouvement de rotation est communiqué à la vis 16 au moyen d'un levier d'actionnement extérieur 22, la vis qui est immobilisée axialement oblige la douille-écrou 18 elle-même bloquée en rotation à se mouvoir axialement en repoussant le piston 12 en direction du disque de frein. Le ressort 20 fait en outre partie d'un mécanisme de rattrapage automatique d'usure, ainsi qu'il est expliqué dans le brevet précité.

Le diagramme de la figure 2 illustre la loi idéale de variation de l'effort F que devrait développer le piston 12 en fonction de sa course L lors d'une manoeuvre d'actionnement du frein, quelle que soit la nature du dispositif utilisé à cet effet. De 0 à $L_0$ le déplacement du piston ne sert qu'à compenser le jeu de garde des garnitures de friction par rapport au disque de frein, et aucun effort moteur n'est nécessaire si l'on excepte celui, négligeable, que requiert la compensation des frottements. Le segment de course $L_0$ $L_1$ correspond à la mise en pression des garnitures sur le disque, l'effort moteur souhaité passant durant ce temps de 0 à $F_1$. Enfin, tout déplacement supplémentaire éventuel du piston, par exemple jusqu'en $L_2$, ne sert plus qu'à compenser l'usure progressive des garnitures, l'effort qu'il développe étant maintenu à la valeur $F_1$.

Le vérin de commande 30 représenté à la figure 3 est du type dit "cylindre à ressort" qui est souvent monté sur les véhicules lourds comme moyen de freinage de secours ou de stationnement. Il se compose essentiellement d'un cylindre 32 qu'un orifice 34 permet de relier à une source d'air comprimé, d'un piston 36 monté coulissant à l'intérieur dudit cylindre, d'un organe de sortie 38 associé à ce piston et guidé en coulissement par un palier 40, et d'un puissant ressort 42 interposé entre le piston et le fond d'un boîtier 44 prolongeant le cylindre. Le dessin représente l'appareil en position normale de fonctionnement: le cylindre 32 étant maintenu sous pression, le piston 36 est repoussé vers la gauche en appui contre l'extrémité du palier 40 et comprime ce faisant le ressort 42, tandis que l'organe de sortie 38 dépasse au maximum du boîtier 44. Lorsque le conducteur du véhicule désire actionner le frein, il agit sur un organe de commande qui interrompt l'alimentation du cylindre 32 en air comprimé et le purge à l'atmosphère: le ressort 42 se détend alors en repoussant le piston 36 vers la droite et en rentrant à l'intérieur du boîtier 44 l'organe de sortie 38 qui, par l'intermédiaire d'un moyen de transmission de force restant à définir, transmet au moteur de frein associé au vérin 30 l'effort moteur développé par le ressort. Sur la représentation de la rigure 3, l'organe de sortie 38 du vérin, qui est classiquement constitué par une simple tige de piston, est remplacé par un embout tubulaire d'ancrage d'extrémité de câble, cet embout étant lui-même muni d'un manchon fileté 46 permettant de régler la tension du câble.

Le diagramme de la figure 4 montre comment varie l'effort de traction F recueilli sur l'organe de sortie 38 en fonction de sa course L, en prenant pour position d'origine 0 celle qui est représentée à la figure 3. On voit que, par suite de la détente progressive du ressort 42, l'effort décroît linéairement d'une valeur $F_2$ à une valeur $F_3$, ceci en supposant le ressort encore partiellement comprimé lorsque l'organe de sortie parvient en bout de course (position $L_3$).

Le rapprochement des diagrammes des figures 2 et 4 montre à l'évidence l'inadaptation des caractéristiques du vérin de commande 30 à l'objectif recherché d'une qualité de freinage idéale au moyen du moteur de frein 10, puisque l'effort disponible est maximum au moment où il pourrait être nul et s'affaiblit par contre sensiblement lorsqu'on souhaiterait le voir s'accroître. Cette inadéquation du moyen de commande à l'objectif recherché s'aggrave encore du fait de la nécessaire conversion de l'effort de traction linéaire disponible sur l'organe de sortie 38 du vérin en un couple de rotation appliqué à la vis 16 du moteur de frein, lequel couple conditionne seul en définitive la poussée exercée sur le piston 12 et donc sur les garnitures de friction; en effet, le bras de levier effectif décroît selon une loi sinusoïdale au fur et à mesure de la rotation du levier d'actionnement 22, ce qui, même à effort de traction supposé constant, entraîne une réduction correspondante du couple appliqué à la vis 16.

L'invention permet de resoudre ce problème grâce à une conception particulière du moyen de transmission de force reliant le vérin de commande 30 au moteur de frein 10. Comme le montre la figure 5 des dessins, ce moyen de transmission de force se compose essentiellement d'un organe 50 en forme de came calé sur l'axe de la vis, ou plus généralement de l'organe rotatif du mécanisme d'actionnement du moteur de frein, cet organe se substituant au levier d'actionnement 22, et d'un organe souple de transmission 52 constitué par le câble attaché à l'organe de sortie 38 du vérin de commande. Dans la forme de réalisation représentée, l'organe 50 est constitué par un secteur de poulie pourvu d'une gorge 54 dans laquelle vient s'enrouler l'extrémité libre du câble 52, l'ancrage de cette extrénuté pouvant s'effectuer de façon classique à la sortie de la gorge au moyen d'un embout de câble 56 et d'un taquet de retenue 58. Comme le montre la figure 6, le rayon au fond de la gorge 54 croît de façon continue entre le point de pénétration du câble 52 en position de repos (ce point coincidant alors avec l'entrée de la gorge) et le point d'attache de son extrémité à la sortie de la gorge. Plus précisément, le profil de la came peut être constitué de trois sections successives: de l'entrée de la gorge au point marqué "X" sur la figure 6, le rayon au fond de la gorge est minimal et varie assez peu, cette zone correspondant à un mouvement d'avance rapide du piston du moteur de frein destiné à la compensation du jeu de garde des garnitures de friction (segment $OL_0$ du diagramme de la figure 2); du point "X" au point "Y" le rayon à fond de gorge, et donc le bras de levier du système, de transmission augmentent rapidement, ce qui permet non seulement de compenser la réduction progressive de l'effort moteur disponible sur l'organe de sortie du vérin de commande, mais encore d'accroître le couple appliqué à la vis du mécanisme d'actionnement du moteur de frein pendant que le piston parcourt le segment $L_0L_1$ du diagramme de la figure 2; du point "Y" à la sortie de la gorge, enfin, l'accroissement du rayon à fond de gorge est plus modéré et ne sert plus qu'à compenser la réduction progressive de l'effort moteur délivré par le vérin de commande par suite de la détente du ressort et à maintenir constant le couple appliqué à la vis du mécanisme d'actionnement alors que le piston du moteur de frein s'engage

sur le segment $L_1L_2$ du diagramme de la figure 2. Il devient ainsi possible, grâce à la modulation du bras de levier du système de transmission au fur et à mesure du déroulement du câble, d'obtenir une loi de variation de la pression de freinage en fonction de la course du piston qui correspond à la courbe tracée en traits mixtes sur la figure 2 et se rapproche sensiblement de la courbe idéale figurée en traits pleins. Il doit être toutefois entendu que d'autres lois de variation pourraient être envisagées pour des applications particulières et obtenues, sans sortir du cadre de l'invention, en dessinant en conséquence le profil de la came matérialisée par le fond de la gorge 54 du secteur de poulie 50.

Dans l'exemple de réalisation représenté à la figure 6 des dessins, le secteur de poulie 50 est prévu pour un angle maximum de rotation de l'ordre de 90° qui paraît suffisant pour les applications courantes. Rien n'empêche cependant, dans le cadre de l'invention, de prévoir s'il est nécessaire des valeurs supérieures: 180°, 270°, voire même une rotation complète ou davantage. Il suffit pour celà d'accroître en conséquence l'angle d'ouverture du secteur de poulie ou, dans le dernier cas, d'y substituer une poulie complète à gorge légèrement hélicoïdale. L'invention permet ainsi, pour des applications qui le requièrent, d'appliquer à la vis du mécanisme d'actionnement du moteur de frein des rotation; d'amplitude très supérieue à ce qu'il est possible d'obtenir avec les systèmes de transmission classiques à tige et manivelle.

De même, alors que l'exemple de réalisation illustré aux figures 5 à 7 suppose que l'axe du vérin de commande 30 et le câble de transmission 52 soient contenus dans un plan sensiblement perpendiculaire à l'axe du moteur de frein 10, l'invention peut tout aussi bien s'accommoder d'une certaine inclinaison de ce plan, pourvu que le secteur de poulie soit conçu en conséquence. La figure 8 illustre schématiquement un tel secteur de poulie 60 dont la gorge 64 présente, en plus de son profil en forme de came tel que décrit ci-dessus à propos du secteur de poulie 50, une inclinaison d'environ 20° par rapport à la normale, permettant de recevoir et de guider un câble (non figuré) qui attaquerait le moteur de frein sous cette même inclinaison. Cette faculté supplémentaire offerte par l'invention peut, dans certains cas, faciliter le montage du vérin de commande sans qu'il soit nécessaire de recourir à des poulies intermédiaires de renvoi.

## Revendications

1. Dispositif de freinage, notamment pour véhicules automobiles, comprenant un moteur de frein muni d'un dispositif d'actionnement mécanique du type rotatif utilisable par exemple comme moyen de secours ou de stationnement et incluant de préférence un mécanisme du genre vis-etécrou à pas réversible, et un vérin de commande relié par un moyen de transmission de force audit dispositif d'actionnement, ce vérin incluant lui-même un ressort qui est normalement maintenu comprimé par un organe soumis à l'action d'un fluide sous pression et qui se détend en exerçant un effort de traction sur ledit moyen de transmission lorsque cesse l'action de ce fluide, caractérisé par le fait que le moyen de transmission de force comprend un organe (50) en forme de came solidaire de l'organe rotatif (16) du dispositif d'actionnement mécanique du moteur de frein (10), et un organe souple de transmission (52) attaché à l'une de ses extrémités à l'organe de sortie (38) du vérin de commande (30) et tenu enroulé à son autre extrémité sur ledit organe en forme de came, le profil de cette dernière étant déterminé de manière à ce que le couple appliqué à l'organe rotatif du dispositif d'actionnement mécanique du moteur de frein suive une loi de variation désirée en fonction de la course de l'organe de sortie du vérin de commande.

2. Dispositif de freinage selon la revendication 1, caractérisé par le fait que le profil de la came est dessiné de manière à assurer une croissance rapide, puis la constance du couple appliqué à l'organe rotatif du dispositif d'actionnement sur une partie au moins de la course de l'organe de sortie du vérin de commande.

3. Dispositif de freinage selon la revendication 2, caractérisé par le fait que l'organe en forme de came est constitué par un secteur de poulie (50) calé sur un arbre solidaire de l'organe rotatif du dispositif d'actionnement mécanique du moteur de frein, ce secteur de poulie étant pourvu d'une gorge (54) dans laquelle est reçue l'extrémité de l'organe souple de transmission (52) et dont le rayon croît de façon continue entre le point de pénétration dudit organe dans la gorge en position de repos et le point d'attache (58) de son extrémité (56).

4. Dispositif de freinage selon la revendication 3, caractérisé par le fait que le profil de la gorge (54) comporte trois sections successives, à savoir une première section dans laquelle le rayon ne croît que lentement à partir de sa valeur minimale, une seconde section dans laquelle il augmente rapidement, et une troisième section dans laquelle il ne croît plus que lentement jusqu'à sa valeur maximale.

5. Dispositif de freinage selon la revendication 3 ou 4, caractérisé par le fait que la gorge (54) présente en outre un faible pas d'inclinaison par rapport à l'axe du moteur de frein afin de permettre à l'angle d'ouverture du secteur poulie (5) d'atteindre ou de dépasser une valeur de 360°.

6. Dispositif de freinage selon la revendication 3 ou 4, caractérisé par le fait que la gorge (64) présente en outre un pas d'inclinaison notable par rapport à l'axe du moteur de frein afin de pemmettre au secteur de poulie (60) de recevoir un organe souple de transmission attaquant le moteur de frein sous un angle différent de 90°.

**Patentansprüche**

1. Bremsvorrichtung, insbesondere für Kraftfahrzeuge, mit einem Bremsmotor, der mit einer mechanischen Rotations-Betätigungsvorrichtung versehen ist, die beispielsweise als Hilfs- oder Parkeinrichtung verwendbar ist und vorzugsweise einen reversierbaren Schrauben-Mutter-Mechanismus enthält, und einem Stellmotor, der durch Kraftübertragungsmittel mit der Betätigungsvorrichtung verbunden ist, wobei der Stellmotor seinerseits eine Feder umfaßt, die normalerweise von einem der Wirkung eines Druckmittels ausgesetzten Teil komprimiert wird und bei Beendigung der Wirkung des Druckmittels sich ausdehnt, wobei sie eine Zugkraft auf die Kraftübertragungsmittel ausüht, dadurch gekennzeichnet, daß die Kraftübertragungsmittel bestehen aus einem nockenförmigen Teil (50), das mit dem Drehkörper (16) der mechanischen Betätigungsvorrichtung des Bremsmotors (10) verbunden ist, das mit einem seiner Enden an dem Abtriebsteil (38) des Stellmotors (30) befestigt ist und mit seinem anderen Ende auf dem nockenförmigen Teil aufgewickelt ist, wobei das Profil des nockenförmigen Teils so gewählt ist, daß das auf den Drehkörper der mechanischen Betätigungsvorrichtung des Bremsmotors ausgeübte Moment einem gewünschten Änderungsgesetz in Abhängigkeit von dem Weg des Abtriebsteils des Stellmotors folgt.

2. Bremsvorrichtung nach Anspruch 1, dadurch gekennzeichnet, daß das Profil des Nockens so gewählt ist, daß er einen raschen Anstieg und dann die Konstanz des Momentes sicherstellt, das auf den Drehkörper der Betätigungsvorrichtung während mindestens eines Abschnittes des Weges des Abtriebsteils des Stellmotors ausgeübt wird.

3. Bremsvorrichtung nach Anspruch 2, dadurch gekennzeichnet, daß das nockenförmige Teil von einem Scheibensektor (50) gebildet wird, der auf einer Welle des Drehkörpers der mechanischen Betätigungsvorrichtung des Bremsmotors angebracht ist, wobei der Scheibensektor mit einer Nut (54) versehen ist, von der das Ende des biegsamen Übertragungsteiles (52) aufgenommen wird und dessen Radius zwischen dem Angriffspunkt des Übertragungsteils an der Nut in der Ruhestellung und dem Befestigungspunkt (58) seines Endes (56) kontinuierlich größer wird.

4. Bremsvorrichtung nach Anspruch 3, dadurch gekennzeichnet, daß das Profil der Nut (54) drei aufeinanderfolgende Abschnitte aufweist, und zwar einen ersten Abschnitt, in dem der Radius von seinem minimalen Weg aus nur langsam größer wird, einen zweiten Abschnitt, in dem er rasch größer wird, und einem dritten Ahschnitt, in dem er nur langsam bis zu seinem maximalen Wert ansteigt.

5. Bremsvorrichtung nach Ahspruch 3 oder 4, dadurch gekennzeichnet, daß die Nut (54) ferner eine geringfügige Neigung bezüglich der Achse des Bremsmotors besitzt, damit der Öffnungswinkel des Scheibensektors (50) einen Wert von 360° erreichen oder übersteigen kann.

6. Bremsvorrichtung nach Anspruch 3 oder 4, dadurch gekennzeichnet, daß die Nut (64) ferner eine beträchtliche Steigung bezüglich der Achse des Bremsmotors besitzt, damit der Scheibensektor (60) ein biegsames Übertragungselement aufnehmen kann, das am Bremsmotor unter einem von 90° verschiedenen Winkel angreift.

**Claims**

1. A brake device, in particular for automotive vehicles, comprising a brake motor provided with a mechanical actuating device of the rotatable type adapted to be used for example as emergency or parking means and including preferably a mechanism of the reversible screw-nut-type, and a jack connected by force-transmitting means to said actuating device, said jack including a spring which is normally held compressed by a member subjected to the action of a pressure fluid and expanding to exert a traction force on said force-transmitting means when the action of the fluid terminates, characterized in that the force-transmitting means comprises a cam member (50) fixed to the rotatable member (16) of the mechanical actuating device of the brake motor (10), and a flexible transmitting member (52) connected at one of its ends to the output member (38) of the jack (30) and having its other end wound on said cam member, the profile of the latter being determined such that the torque applied to the rotatable member of the mechanical actuating device of the brake motor follows a law of desired variation in response to the stroke of the output member of the jack.

2. Brake device according to claim 1, characterized in that the profile of the cam is designed such so as to rapidly increase and thereafter to maintain constant the torque applied to the rotatable member of the actuating device during at least a portion of the stroke of the output member of the jack.

3. Brake device according to claim 2, characterized in that the cam member is comprised by a sheave sector (50) mounted on a shaft fixed to the rotatable member of the mechanical actuating device of the brake motor, said sheave sector being provided with a groove (54) receiving the end of the flexible transmitting member (52) and having a radius continuously increasing between the point of penetration of said member into the groove in the rest position and the point of connection (58) of its end (56).

4. Brake device according to claim 3, characterized in that the profile of the groove (54) comprises three successive sections, i.e. a first section wherein the radius increases only slowly from its minimal value, a second section wherein it increases rapidly, and a third section wherein it increases only slowly up to its maximum value.

5. Brake device according to claim 4 or claim 4, characterized in that the groove (54) presents an inclination of small pitch with respect to the axis of the brake motor in order to allow for the opening angle of the sheave section (50) to attain or exceed a value of 380°.

6. Brake device according to claim 3 or claim 4, characterized in that the groove (64) presents a substantial pitch inclination with respect to the axis of the brake motor in order to allow for the sheave section (60) to receive a flexible transmission member engaging the brake motor under an angle different from 90°.

FIG_1

FIG_2

FIG.3

FIG.4

FIG_5

30

10

50

38

46

52

56

50

58

52

Y

X

VII

VII

FIG_6

50

FIG_7

54

52

60

FIG_8

64